# EUROPÄISCHE PATENTSCHRIFT

(11) **EP 3 948 038 B1**
(45) Veröffentlichungstag und Bekanntmachung des Hinweises auf die Patenterteilung: **15.02.2023**
(21) Anmeldenummer: 20725416.0
(22) Anmeldetag: 22.04.2020
(51) Int. Cl.: F16L 23/18, F16J 15/06

(54) **ANORDNUNG UND VERFAHREN ZUM AUSGLEICH EINES VERSATZES ZWISCHEN ZWEI ROHRFLANSCHEN**
ASSEMBLY AND METHOD TO CORRECT AN OFFSET BETWEEN TWO PIPE FLANGES
AGENCEMENT ET MÉTHODE POUR CORRIGER UN DÉCALAGE ENTRE DEUX BRIDES DE TUBES

(30) Priorität: 23.05.2019 EP 19176103
(43) Veröffentlichungstag der Anmeldung: 09.02.2022
(73) Patentinhaber: Siemens Aktiengesellschaft, 80333 München (DE)
(72) Erfinder: DINGS, Markus, 41379 Brüggen (DE)
(86) Internationale Anmeldenummer: PCT/EP2020/061142
(87) Internationale Veröffentlichungsnummer: WO 2020/233926

(56) Entgegenhaltungen:
- EP-A2- 2 708 659
- DE-A1-102012 102 821
- FR-A- 1 591 118
- US-A1- 2011 138 730

## Beschreibung

Die Erfindung betrifft eine Anordnung zum Ausgleich eines Versatzes zwischen zwei Rohrflanschen umfassend: Anpassringe, die jeweils eine sich entlang einer Achse erstreckende Ausnehmung aufweisen, um die sich ein Ringmaterial entlang einer Umfangsrichtung erstreckt, wobei die Anpassringe jeweils zwei Anlageflächen aufweisen, wobei die Anlageflächen zumindest entlang zu der Achse konzentrischer Kreisbahnen ebene im Wesentlichen kreisringförmige Anlageflächen aufweisen, wobei ein Querschnitt des Ringmaterials entlang der Umfangsrichtung eine sich ändernde axiale Ringmaterialstärke aufweist, derart, dass zumindest zwei der Anpassringe eine Keilform mit einen Winkelversatz der beiden Anlageflächen zueinander aufweisen.

Flansche im Sinne der Erfindung werden auch als Rohrleitungsflansche bezeichnet. Solche Flansche sind aus DE 10 2012 102821 A1 bekannt. Wenn vorliegend über Flansche ausgeführt wird, sind ausschließlich Rohrleitungsflansche gemeint. Flansche dienen der dichten, lösbaren Verbindung von Rohrabschnitten. Entscheidend für Dichtheit ist der mittels Flanschschrauben aufgebrachte Anpressdruck der kreisringförmigen Dichtflächen der Flansche auf eine gegebenenfalls dazwischen liegende Dichtung. Die Schrauben erstrecken sich durch Bohrungen in den Flanschen bzw. den sogenannten Flanschblättern. Flansche sind als Bestandteil der Rohrleitung in der Regel mit einem Rohrende verschweißt. Flansche können auch an Anschlussbauteilen vorgesehen sein. Verschiedene Flansche unterschiedlicher Metallwerkstoffe sind unter anderem beschrieben in: EN 1092-1, EN 1092-2, EN 1092-3, EN 1092-4.

Häufig kommt es bei der Herstellung von Rohrleitungen und der Aufstellung von angeschlossenen Maschinen zu einem räumlichen Versatz der zusammenzufügenden Flansche, zum Beispiel aufgrund von Schweißverzug.

Die Kompensation eines derartigen Versatzes erfordert herkömmlich eine aufwendige Nacharbeit oder Anpassungsarbeit vor Ort unter regelmäßig schlechten Bedingungen, insbesondere ohne geeignete Werkzeugmaschinen.

Die Erfindung hat es sich zur Aufgabe gemacht, diese Arbeiten zu vereinfachen.

Um flexibel verschiedenartige Versatzphänomene zwischen Flanschen einfach kompensieren zu können, wird zur Lösung der Aufgabe erfindungsgemäß eine Anordnung gemäß Anspruch 1 vorgeschlagen. Weiterhin wird ein Verfahren zur Montage einer derartigen Anordnung vorgeschlagen.

Die einzelnen Anpassringe sind derart ausgebildet, dass mindestens vier der Anpassringe eine Keilform mit einem Winkelversatz der beiden Anlageflächen zueinander aufweisen. Anders ausgedrückt, weisen mindestens drei der Anpassringe zwei im Wesentlichen kreisringförmige Anlageflächen auf, die mit einer jeweiligen Flächennormalen im Wesentlichen in Richtung der Achse weisen, wobei ein Querschnitt des Ringmaterials entlang der Umfangsrichtung eine sich ändernde axiale Ringmaterialstärke aufweist, derart, dass die beiden Flächennormalen einen Winkelversatz zueinander aufweisen.

Die zwei Anlageflächen weisen zumindest entlang zu der Achse konzentrischer Kreisbahnen ebene im Wesentlichen kreisringförmige Anlageflächen auf, damit die Anpassringe zueinander während der Montage um die Achse der Erstreckung der Ausnehmung verdreht werden können. Die Anlageflächen können demgemäß vollkommen eben ausgebildet sein oder entlang der Konzentrischen Kreisbahnen sich erstreckende Erhebungen oder Nuten aufweisen. Mittel dieser Erhebungen, Nuten oder Ausnehmungen ist eine radiale Zentrierung der Anpassringe zueinander denkbar.

Der erfindungsgemäße Einsatz von mindestens drei, bevorzugt mindestens vier Anpassringen ermöglicht eine Kompensation eines Versatzes, der eine Kombination sein kann aus einem Axialversatz, einem Winkelversatz und einem Parallelversatz oder nur eine einzelne Versatzart der aufgezählten Versatzarten.

Eine vorteilhafte Weiterbildung der Erfindung sieht vor, dass der Keilwinkel für die keilförmigen Anpassringe zwischen < 2° bis 6° (Winkel ist abhängig von der Nennweite und sollte gem. der zu korrigierenden axialen Toleranz gewählt werden) beträgt. Eine derartige Keilform ermöglicht die Kompensation der meisten auf der Baustelle auftretenden Versatzphänomene. Eine weitere vorteilhafte Weiterbildung sieht vor, dass die keilförmigen Anpassringe jeweils eine minimale axiale Ringmaterialstärke aufweisen und eine maximale axiale Ringmaterialstärke aufweisen, wobei bei einem mittleren Innendurchmesser gilt: 0,005 < ((Differenz der Ringmaterialstärken)/Innendurchmesser) < 1,025.

Eine andere vorteilhafte Weiterbildung der Erfindung sieht vor, dass zumindest einige, bevorzugt alle Anpassringe untereinander stoffschlüssig, insbesondere mittels einer Klebung, verbunden sind. Ein geeigneter Kleber hierzu ist beispielsweise Silikon. Dichtungsmaterialien können variieren von separater Dichtung mittels O-Ring bzw. Rundschnur über Gummierung der Rings bis zur Klebung wie oben beschrieben.

Besonders geeignet ist die erfindungsgemäße Anordnung zu überbrückender Ausfüllung eines Versatzes zwischen zwei Flanschen, die sich mit einer Flanschdichtfläche im Wesentlichen gegenüberstehen. Insbesondere kann es bei dem Versatz zwischen den Versatzdichtflächen zueinander sich um einen Winkelversatz zwischen 0,05° bis 8° (abhängig von der Nennweite der Flansche bzw. den zul. Toneranzen der Rohrleitungen) handeln. Ein Axialabstand zwischen den Flanschen bzw. den Flanschdichtflächen kann größer als 1mm sein. Bevorzugt handelt es sich um vier Anpassringe zwischen den beiden Flanschdichtflächen, es können aber auch nur drei Anpassringe je nach Axialabstand und Winkelversatz benutzt werden. Zusätzlich oder statt des Winkelversatzes kann der Versatz zwischen den beiden Flanschdichtflächen auch als Parallelversatz ausgebildet sein. Die Anpassringe sind hierbei derart um die Achse gegeneinander verdreht, dass die Anpassringe den Versatz zwischen den Flanschdichtflächen ausfüllen bzw. kompensieren.

Die Erfindung sieht außerdem ein Verfahren zum Ausgleich eines Versatzes zwischen zwei Rohrflanschen, umfassend Flanschdichtflächen, vor, mittels einer Anordnung nach mindestens einem der Vorrichtungsansprüche.

Das Verfahren sieht hierzu die folgenden Schritte vor:
a) Ausrichtung der Rohrflansche mit zwischen den Flanschdichtflächen angeordneten mindestens drei Anpassringen,
b) Verdrehen der Anpassringe um die Achse zueinander in eine Fügeposition derart, dass die jeweils direkt den Flanschdichtflächen gegenüberliegenden Anlageflächen der Anpassringe zu der jeweils gegenüberliegenden Flanschdichtfläche im Wesentlichen parallel ausgerichtet sind und die jeweils der Flanschdichtflächen benachbart angeordneten Anpassringe mit der sich entlang der Achse erstreckende Ausnehmung jeweils im Wesentlichen konzentrisch zu dem benachbarten Rohrflansch angeordnet ist,
c) Stoffschlüssiges Zusammenfügen der Anpassringe in der Fügeposition oder mittels separater Dichtung und formschlüssiger Markierung mittels z.B. Körnung,
d) Fertigmontage der zwei Rohrflansche zu einer Flanschverbindung unter Zwischenanordnung der Anpassringe zwischen den beiden Flanschdichtflächen.

Eine vorteilhafte Weiterbildung des erfindungsgemäßen Verfahrens sieht außerdem vor, dass nach dem Verdrehen und vor dem stoffschlüssigen Zusammenfügen der folgende Schritt erfolgt:
b1) Überprüfung der Spannungsfreiheit der Anordnung mit den Anpassringen.

Weiterhin kann folgender zusätzlicher Schritt erfolgen:
b2) Markierung der relativen Umfangsposition der Anpassringe zueinander in der Fügeposition.

Vorteilhaft kann außerdem noch der weitere Schritt erfolgen:
b3) Entnahme der Anpassringe aus der Anordnung zwischen den Flanschdichtflächen.

Im Folgenden ist die Erfindung anhand spezieller Ausführungsbeispiele unter Bezugnahme auf Zeichnungen näher erläutert.

Es zeigen:
- Figur 1: eine schematische dreidimensionale Darstellung eines Anpassrings nach der Erfindung,
- Figuren 2 - 4: jeweils eine schematische zweidimensionale Darstellung einer seitlichen Sicht auf die verschiedenen Konfigurationen der Anpassringe zwischen zwei sich gegenüberstehenden Flanschen,
- Figur 5: ein schematisches Flussdiagramm zur Illustration des erfindungsgemäßen Verfahrens.

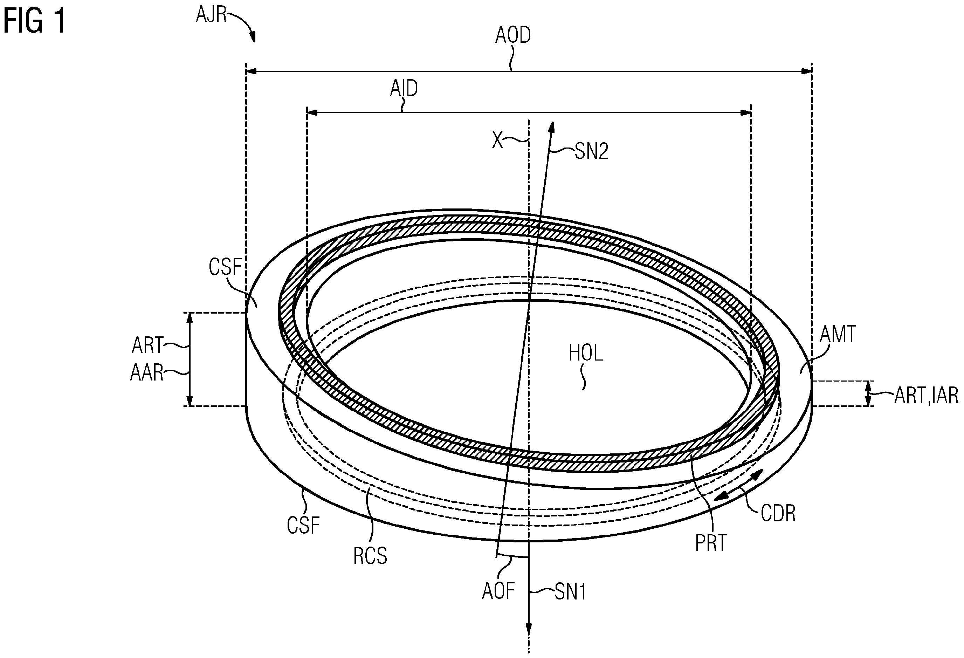

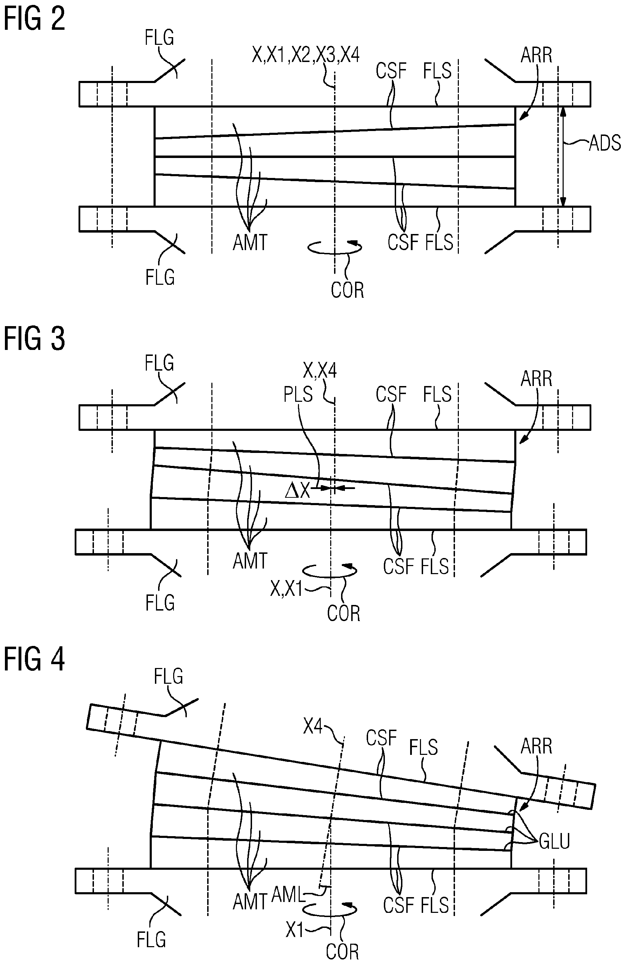

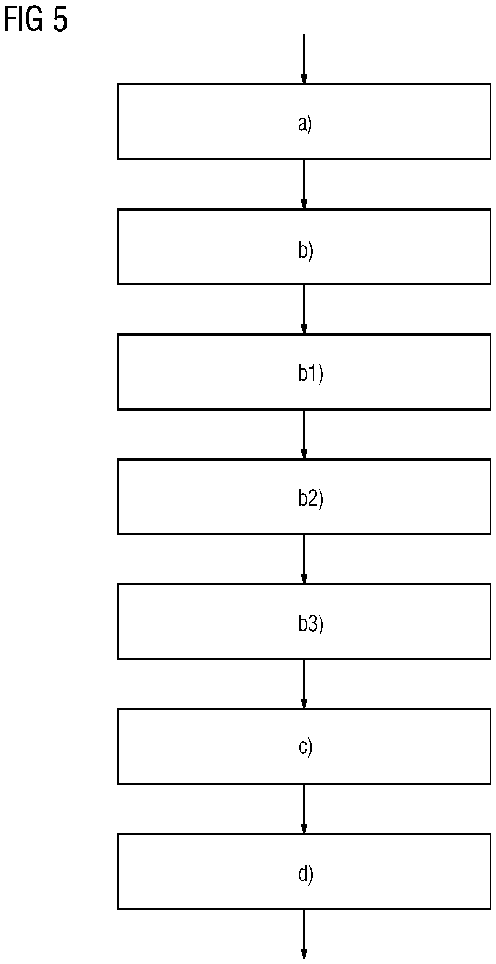

Figur 1 zeigt eine schematische dreidimensionale Darstellung eines Anpassrings AJR. Die Figuren 2 - 4 zeigen jeweils eine seitliche schematische Darstellung einer Anordnung ARR umfassend jeweils vier Anpassringe AJR zwischen jeweils zwei mit einer Flanschdichtfläche FLS im Wesentlichen sich gegenüberstehenden Flanschen FLG. Figur 5 zeigt ein schematisches Ablaufdiagramm eines Verfahrens zur Montage einer erfindungsgemäßen Anordnung ARR.

Der in Figur 1 dargestellte Anpassring AJR ist zum Ausgleich eines Versatzes OFT zwischen zwei Rohrflanschen FLG, wie in den Figuren 2 - 4 dargestellt, vorgesehen. Der Anpassring AJR hat eine sich entlang einer Achse X erstreckende Ausnehmung HOL, um die sich ein Ringmaterial AMT entlang einer Umfangsrichtung CDR erstreckt. Beidseitig axial-stirnseitig weist der Anpassring AJR zwei Anlageflächen CSF auf. Die Anlageflächen CSF sind zumindest entlang zu der Achse X konzentrischer Kreisbahnen als Ebene und im Wesentlichen kreisringförmige Anlageflächen CSF ausgebildet. Ein Querschnitt des Ringmaterials AMT entlang der Umfangsrichtung CDR weist eine sich ändernde axiale Ringmaterialstärke ART auf. Dadurch ist der Anpassring AJR keilförmig ausgebildet und die beiden Anlagenflächen CSF sind nicht zueinander parallel, sondern weisen einen Winkelversatz AOF auf. Zu Verdeutlichung sind in der Figur 1 auch für die jeweiligen Anlageflächen CSF Flächennormalen SN1, SN2 eingezeichnet, die im Wesentlichen in Richtung der Achse auf der einen Seite weisen (die erste Flächennormale SN1 ist parallel zur Achse X), wobei die zweite Flächennormale SN2 einen Winkelversatz AOF zu der ersten Flächennormalen SN1 bzw. zur Achse X aufweist. Hier optional dargestellt, weist der Anpassring AJR an der nach oben weisenden Anlagefläche CSF einen sich kreisringförmig auf der Anlagefläche erstreckenden Vorsprung PRT auf, der mit einem korrespondieren kreisringförmigen Ausschnitt RCS eines benachbarten Anpassrings AJR (ist hier mittels gestrichelter Linien als verdeckte Kontur und optional in Figur 1 dargestellt) in Eingriff gebracht werden kann, so dass ein radialer Relativersatz zwischen zwei benachbarten Anpassringen nicht möglich ist. Diese Relativversatzblockade ist nur optional und auch nur für Anpassringe AJR vorgesehen, die nicht mit der entsprechenden Anlagefläche CSF mit einer Flanschdichtungsfläche FLS in Kontakt treten. Alternativ oder zusätzlich zu dieser formschlüssigen Bewegungseinschränkung relativ zwischen zwei Anpassringen AJR ist eine stoffschlüssige Verbindung zwischen zwei benachbarten Anpassringen AJR vorgesehen, in der Art einer Klebung GLU, z.B. mittels Silikons. Zwischen den einzelnen Anpassringen AJR und/oder zwischen den Anpassringen AJR und den Flanschdichtungsflächen FLS können Dichtungen oder Stoffe zum Abdichten je nach Anforderung vorgesehen sein. Der Keilwinkel AOS bzw. der Winkelversatz AOS zwischen den beiden Flächennormalen SN1, SN2 beträgt für mindestens einige keilförmige Anpassringe AJR zwischen 2° bis 6°. Bevorzugt sind alle keilförmigen Anpassringe AJR der Anordnung ARR mit identischen Keilwinkeln ausgebildet.

Die keilförmigen Anpassringe AJR weisen jeweils eine minimale axiale Ringmaterialstärke IAR auf und eine maximale axiale Ringmaterialstärke AAR. Daneben weisen die keilförmigen Anpassringe AJR einen mittleren Innendurchmesser AID auf und einen mittleren Außendurchmesser AOD. Für einem Zusammenhang zwischen den Ringmaterialstärken IAR, AAR und dem mittleren Innendurchmesser AID gilt: 0,005 < (AAR - IAR) / AID < < 1,025.

Für das Verhältnis des mittleren Außendurchmessers AOD und des mittleren Innendurchmessers AID gilt weiterhin:
1,002 < AOD/AID < 1,2 abhängig von dem jeweiligen Flanschdichtflächenverhältnis.

In der Figur 2 ist der Fall dargestellt, dass die beiden Flanschdichtflächen FLS der beiden sich gegenüberstehenden Flansche FLG lediglich einen Axialabstand ADS zueinander aufweisen. Dementsprechend sind die keilförmigen Anpassringe AJR derart zueinander verdreht, dass der jeweilige Keilwinkel AOF von den benachbarten Anpassringen AJR kompensiert wird. Dementsprechend fallen sämtliche Erstreckungsachsen X1, X2, X3, X4 der beteiligten Anpassringen AJR mit der zentralen Achse X zusammen.

Figur 3 zeigt einen Parallelversatz PLS der beiden sich gegenüberliegenden Flansche FLG bzw. der Flanschdichtungsflächen FLS. Der Parallelversatz PLS wird mittels der Anpassringe AJR dadurch ausgeglichen, dass die vier Anpassringen jeweils in Zweier-Gruppen mit identischer Umfangsposition der maximalen axialen Ringstärke AAR ausgerichtet sind. Auf diese Weise wird ein Winkelversatz der endseitigen Anlageflächen der Zweier-Gruppe verursacht. Eine zweite Zweier-Gruppe mit ebenfalls identischer Umfangsausrichtung der beiden Anpassringe AJR ist zu der ersten Gruppe mit entgegengesetzter Ausrichtung in Umfangsrichtung angeordnet. Dadurch wird der Winkelversatzes der insgesamt vier Anpassringe AJR kompensiert. Es verbleibt lediglich ein Parallelversatz PLS, der den Kompensationsanforderungen der Anordnung ARR entspricht.

Figur 4 zeigt eine Situation, bei der die sich gegenüberliegenden Flansche FLG neben dem Axialversatz ADS auch einen Winkelversatz AOF aufweisen. Der Winkelversatz wird mittels der vier Anpassringe AJR ausgeglichen, indem die Umfangsposition der vier Anpassringen AJR identisch ist, so dass die Umfangposition mit der maximalen axialen Ringstärke ART jeweils übereinstimmen. Diese drei Basisfälle werden in realen Montagesituation miteinander derart überlagert, dass die Kombination aus Axialversatz bzw. Axialabstand ADS, Winkelversatz AOF und Parallelversatz PLS in den Grenzen der Keilform der Anpassringe jeweils ausgeglichen werden mittels Drehung der einzelnen Anpassringe AJR, bis die Versatzsituation ausgeglichen ist.

Figur 5 zeigt ein Flussdiagramm, dass das Verfahren zum Ausgleich eines Versatzes OFT zwischen zwei Rohrflanschen FLG wiedergibt.

In einem ersten Schritt a) erfolgt eine Ausrichtung der Rohrflansche FLG mit zwischen den Flanschdichtflächen FLS angeordneten mindestens drei Anpassringen AJR, bevorzugt mit vier Anpassringen AJR.

In einem zweiten Schritt b) folgt ein Verdrehen der Anpassringe AJR um die Achse X zueinander in eine Fügeposition derart, dass die jeweils direkt den Flanschdichtflächen FLS gegenüberliegenden Anlageflächen der Anpassringe AJR zu der jeweils gegenüberliegenden Flanschdichtfläche FLS im Wesentlichen parallel ausgerichtet sind und die jeweils der Flanschdichtflächen FLS benachbart angeordneten Anpassringe AJR mit der sich entlang der Achse X erstreckende Ausnehmung HOL jeweils im Wesentlichen konzentrisch zu dem benachbarten Rohrflansch FLG angeordnet ist,

In einem optionalen Unterschritt des Schritts b) - hiermit b1) bezeichnet - erfolgt die optionale Überprüfung der Spannungsfreiheit der Anordnung ARR mit den Anpassringen AJR.

In einem ebenfalls optionalen Unterschritt b2) des zweiten Schrittes erfolgt eine Markierung der relativen Umfangsposition der Anpassringe AJR zueinander in der Fügeposition.

Ein weiterer optionaler Unterschritt b3) sieht vor, dass vor dem stoffschlüssigen Zusammenfügen eine Entnahme der Anpassringe AJR aus der Anordnung zwischen den Flanschdichtflächen FLS erfolgt. Die Entnahme findet zum Zwecke des Zusammenklebens der Anpassringe AJR statt.

In dem Folgenden dritten Schritt c) erfolgt das stoffschlüssige Zusammenfügen der Anpassringe AJR in der Fügeposition.

Schließlich erfolgt in einem vierten Schritt d) die Fertigmontage der zwei Rohrflansche FLG zu einer Flanschverbindung unter Zwischenanordnung der Anpassringe AJR zwischen den beiden Flanschdichtflächen FLS.

## Patentansprüche

1. Anordnung (ARR) zum Ausgleich eines Versatzes (OFT) zwischen zwei Rohrflanschen (FLG) umfassend:
Anpassringe (AJR), die jeweils eine sich entlang einer Achse (X) erstreckende Ausnehmung (HOL) aufweisen, um die sich ein Ringmaterial (AMT) entlang einer Umfangsrichtung (CDR) erstreckt,
wobei die Anpassringe (AJR) jeweils zwei Anlageflächen (CSF) aufweisen,
wobei die Anlageflächen (CSF) zumindest entlang zu der Achse (X) konzentrischer Kreisbahnen ebene im Wesentlichen kreisringförmige Anlageflächen (CSF) aufweisen,
wobei ein Querschnitt des Ringmaterials (AMT) entlang der Umfangsrichtung (CDR) eine sich ändernde axiale Ringmaterialstärke (ART) aufweist, derart, dass zumindest vier der Anpassringe (AJR) eine Keilform mit einen Winkelversatz (AOF) der beiden Anlageflächen (CSF) zueinander aufweisen,
**dadurch gekennzeichnet, dass**
die Anordnung (ARR) mindestens vier keilförmige zueinander anliegende Anpassringe (AJR) umfasst.

2. Anordnung (ARR) nach Anspruch 1,
wobei der Keilwinkel (AOS) für die keilförmigen Anpassringe (AJR) zwischen 0,01° bis 6° beträgt.

3. Anordnung (ARR) nach Anspruch 1 oder 2,
wobei die keilförmigen Anpassringe (AJR) jeweils eine minimale axiale Ringmaterialstärke (IAR) aufweisen und eine maximale axiale Ringmaterialstärke (AAR) aufweisen, einen mittleren Innendurchmesser (AID) aufweisen,
wobei gilt: 0,005 < (AAR - IAR) / AID < 1,025.

4. Anordnung (ARR) nach mindestens einem der vorhergehenden Ansprüche,
wobei die Anpassringe (AJR) einen mittleren Außendurchmesser (AOD) und einen mittleren Innendurchmesser (AID) aufweisen,
wobei für das Verhältnis gilt:
1,002 < AOD/AID < 1,2 abhängig von der jeweiligen Flanschdichtflächenverhältnis.

5. Anordnung (ARR) nach mindestens einem der vorhergehenden Ansprüche,
wobei zumindest einige, bevorzugt alle Anpassringe (AJR) untereinander stoffschlüssig, insbesondere mittels einer Klebung (GLU), verbunden sind.

6. Anordnung (ARR) nach mindestens einem der vorhergehenden Ansprüche,
wobei die Anordnung zwei Flansche (FLG) umfasst,
wobei die Flansche (FLG) sich mit einer Flanschdichtfläche (FLS) im Wesentlichen gegenüberstehen,
wobei die Flanschdichtflächen (FLS) zueinander einen Winkelversatz zwischen 0,01° - 6° aufweisen,
wobei die Flansche (FLG) einen Axialabstand (ADS) aufweisen, mit ADS > 1mm,
wobei mindestens drei, bevorzugt vier, Anpassringe (AJR) zwischen den beiden Flanschdichtflächen (FLS) der beiden Flansche (FLG) angeordnet sind,
wobei die mindestens drei Anpassringe (AJR) derart zueinander um die Achse (X) verdreht angeordnet sind,
dass der Axialabstand (ADS) und der Winkelversatz (AML) von den Anpassringen (AJR) überbrückend ausgefüllt werden.

7. Anordnung (ARR) nach Anspruch 6,
wobei zusätzlich zu dem Winkelversatz (AML) oder statt des Winkelversatzes (AML) ein Parallelversatz (PLS) zwischen den beiden Flanschen (FLG) vorliegt,
wobei mittels des Verdrehens der Anpassringe (AJR) auch der Parallelversatz (PLS) von den Anpassringen (AJR) überbrückend ausgefüllt wird.

8. Verfahren zum Ausgleich eines Versatzes (OFT) zwischen zwei Rohrflanschen (FLG), umfassend Flanschdichtflächen (FLS), mittels einer Anordnung nach mindestens einem der vorhergehenden Ansprüche 1-7, umfassend die folgenden Schritte:
a) Ausrichtung der Rohrflansche (FLG) mit zwischen den Flanschdichtflächen (FLS) angeordneten mindestens drei Anpassringen (AJR),
b) Verdrehen der Anpassringe (AJR) um die Achse (X) zueinander in eine Fügeposition derart, dass die jeweils direkt den Flanschdichtflächen (FLS) gegenüberliegenden Anlageflächen der Anpassringe (AJR) zu der jeweils gegenüberliegenden Flanschdichtfläche (FLS) im Wesentlichen parallel ausgerichtet sind und die jeweils der Flanschdichtflächen (FLS) benachbart angeordneten Anpassringe (AJR) mit der sich entlang der Achse (X) erstreckende Ausnehmung (HOL) jeweils im Wesentlichen konzentrisch zu dem benachbarten Rohrflansch (FLG) angeordnet ist,
c) Stoffschlüssiges Zusammenfügen der Anpassringe (AJR) in der Fügeposition,
d) Fertigmontage der zwei Rohrflansche (FLG) zu einer Flanschverbindung unter Zwischenanordnung der Anpassringe (AJR) zwischen den beiden Flanschdichtflächen (FLS).

9. Verfahren nach Anspruch 8, wobei nach dem Verdrehen und vor dem stoffschlüssigen Zusammenfügen der folgende Schritt erfolgt:
b1) Überprüfung der Spannungsfreiheit der Anordnung (ARR) mit den Anpassringen (AJR).

10. Verfahren nach Anspruch 8, wobei nach dem Verdrehen und vor dem stoffschlüssigen Zusammenfügen der folgende Schritt erfolgt:
b2) Markierung der relativen Umfangsposition der Anpassringe (AJR) zueinander in der Fügeposition.

11. Verfahren nach Anspruch 8 oder 9, wobei nach dem Verdrehen und vor dem stoffschlüssigen Zusammenfügen der folgende Schritt erfolgt:
b3) Entnahme der Anpassringe (AJR) aus der Anordnung zwischen den Flanschdichtflächen (FLS).

## Claims

1. Arrangement (ARR) for the compensation of an offset (OFT) between two pipe flanges (FLG) comprising:
adapting rings (AJR) which in each case have a recess (HOL) which extends along an axis (X) and around which a ring material (AMT) extends along a circumferential direction (CDR), the adapting rings (AJR) in each case having two bearing faces (CSF),
the bearing faces (CSF) having planar substantially circularly annular bearing faces (CSF) at least along circular paths which are concentric with respect to the axis (X),
a cross section of the ring material (AMT) along the circumferential direction (CDR) having a changing axial ring material thickness (ART) in such a way that at least four of the adapting rings (AJR) have a wedge shape with an angular offset (AOF) of the two bearing faces (CSF) with respect to one another,
**characterized in that**
the arrangement (ARR) comprises at least four wedge-shaped mutually adjacent adapting rings (AJR).

2. Arrangement (ARR) according to Claim 1,
the wedge angle (AOS) for the wedge-shaped adapting rings (AJR) being between 0.01° and 6°.

3. Arrangement (ARR) according to Claim 1 or 2,
the wedge-shaped adapting rings (AJR) in each case having a minimum axial ring material thickness (IAR) and having a maximum axial ring material thickness (AAR), and having a mean internal diameter (AID),
the following applying: 0.005 < (AAR - IAR) / AID < 1.025.

4. Arrangement (ARR) according to at least one of the preceding claims,
the adapting rings (AJR) having a mean external diameter (AOD) and a mean internal diameter (AID),
the following applying to the ratio:
1.002 < AOD/AID < 1.2 depending on the respective flange sealing face ratio.

5. Arrangement (ARR) according to at least one of the preceding claims,
at least some, preferably all, of the adapting rings (AJR) being connected among one another in an integrally joined manner, in particular by means of an adhesive bond (GLU).

6. Arrangement (ARR) according to at least one of the preceding claims,
the arrangement comprising two flanges (FLG),
the flanges (FLG) lying substantially opposite one another with a flange sealing face (FLS),
the flange sealing faces (FLS) having an angular offset between 0.01° and 6° with respect to one another,
the flanges (FLG) being at an axial spacing (ADS), where ADS > 1 mm,
at least three, preferably four, adapting rings (AJR) being arranged between the two flange sealing faces (FLS) of the two flanges (FLG),
the at least three adapting rings (AJR) being arranged such that they are turned about the axis (X) with respect to one another in such a way
that the axial spacing (ADS) and the angular offset (AML) are filled by the adapting rings (AJR) in a bridging manner.

7. Arrangement (ARR) according to Claim 6,
there being a parallel offset (PLS) between the two flanges (FLG) in addition to the angular offset (AML) or instead of the angular offset (AML),
the parallel offset (PLS) also being filled by the adapting rings (AJR) in a bridging manner by means of the turning of the adapting rings (AJR).

8. Method for compensating for an offset (OFT) between two pipe flanges (FLG), comprising flange sealing faces (FLS), by means of an arrangement according to at least one of the preceding Claims 1-7, comprising the following steps:
a) orienting of the pipe flanges (FLG) with at least three adapting rings (AJR) which are arranged between the flange sealing faces (FLS),
b) turning of the adapting rings (AJR) about the axis (X) with respect to one another into a joining position in such a way that those bearing faces of the adapting rings (AJR) which in each case lie directly opposite the flange sealing faces (FLS) are oriented substantially parallel to the respective opposite flange sealing face (FLS), and the adapting rings (AJR) which are arranged in each case adjacently with respect to the flange sealing faces (FLS) are arranged with the recess (HOL) which extends along the axis (X) in each case substantially concentrically with respect to the adjacent pipe flange (FLG),
c) integrally joined joining of the adapting rings (AJR) in the joining position,
d) final assembling of the two pipe flanges (FLG) to form a flange connection with arranging of the adapting rings (AJR) between the two flange sealing faces (FLS).

9. Method according to Claim 8, the following step taking place after the turning and before the integrally joined joining:
b1) checking of the absence of stress of the arrangement (ARR) with the adapting rings (AJR).

10. Method according to Claim 8, the following step taking place after the turning and before the integrally joined joining:
b2) marking of the relative circumferential position of the adapting rings (AJR) with respect to one another in the joining position.

11. Method according to Claim 8 or 9, the following step taking place after the turning and before the integrally joined joining:
b3) removing of the adapting rings (AJR) out of the arrangement between the flange sealing faces (FLS).

## Revendications

1. Montage (ARR) de compensation d'un décalage (OFT) entre deux brides (FLG) de tuyau comprenant :
des bagues (AJR) d'adaptation, qui ont chacune un évidement (HOL), qui s'étend suivant un axe (X) et autour duquel un matériau (AMT) de bague s'étend suivant une direction (CDR) de pourtour,
dans lequel les bagues (AJR) d'adaptation ont chacune deux surfaces (CSF) de contact,
dans lequel les surfaces (CSF) de contact ont des surfaces (CSF) de contact planes sensiblement en forme d'anneau de cercle, au moins le long de l'axe (X) d'orbites circulaires concentriques,
dans lequel une section transversale du matériau (AMT) de bague a, suivant la direction (CDR) de pourtour, une épaisseur (ART) de matériau de bague axiale se modifiant, de manière à ce qu'au moins quatre des bagues (AJR) d'adaptation aient une forme en coin avec un décalage (AOF) angulaire des deux surfaces (CSF) de contact l'une par rapport à l'autre,
**caractérisé en ce que**
le montage (ARR) comprend au moins quatre bagues (AJR) d'application cunéiformes s'appliquant les unes aux autres.

2. Montage (ARR) suivant la revendication 1,
dans lequel l'angle (AOS) de coin des bagues (AJR) d'adaptation cunéiformes est compris entre 0,01° et 6°.

3. Montage (ARR) suivant la revendication 1 ou 2,
dans lequel les bagues (AJR) d'adaptation cunéiformes ont chacune une épaisseur (IAR) axiale minimum de matériau de bague, ont chacune une épaisseur (AAR) axiale maximum de matériau de bague et ont un diamètre (AID) intérieur moyen, dans lequel on a :
0,005 < (AAR -IAR) / AID < 1,025.

4. Montage (ARR) suivant au moins l'une des revendications précédentes,
dans lequel les bagues (AJR) d'adaptation ont un diamètre (AOD) extérieur moyen et un diamètre (AID) intérieur moyen, dans lequel on a le rapport :
1,002 < AOD/AID < 1,2 en fonction du rapport de la surface d'étanchéité de bride respectif.

5. Montage (ARR) suivant au moins l'une des revendications précédentes, dans lequel au moins certaines, de préférence toutes les bagues (AJR) d'adaptation sont reliées entre elles à coopération de matière, notamment au moyen d'un collage (GLU).

6. Montage (ARR) suivant au moins l'une des revendications précédentes,
dans lequel le montage comprend deux brides (FLG),
dans lequel les brides (FLG) se font sensiblement face par une surface (FLS) d'étanchéité de bride,
dans lequel les surfaces (FLS) d'étanchéité de bride ont, l'une par rapport à l'autre, un décalage angulaire compris entre 0,01° et 6°,
dans lequel les brides (FLG) ont une distance (ADS) axiale, avec ADS > 1mm,
dans lequel au moins trois, de préférence quatre, bagues (AJR) d'adaptation sont montées entre les deux surfaces (FLS) d'étanchéité de bride des deux brides (FLG),
dans lequel les au moins trois bagues (AJR) d'adaptation sont montées à torsion les unes par rapport aux autres, autour de l'axe (X), de manière à ce que la distance (ADS) axiale et le décalage (AML) angulaire soit comblé en étant surmonté par les bagues (AJR) d'adaptation.

7. Montage (ARR) suivant au moins la revendication 6,
dans lequel, en plus du décalage (AML) angulaire, ou au lieu du décalage (AML) angulaire, il y a un décalage (PLS) parallèle entre les deux brides (FLG),
dans lequel au moyen de la torsion des bagues (AJR) d'adaptation, le décalage (PLS) parallèle est également comblé en étant surmonté par les bagues (AJR) d'adaptation.

8. Procédé de compensation d'un décalage (OFT) entre deux brides (FLG) de tuyau comprenant des surfaces (FLS) d'étanchéité de bride, au moyen d'un montage suivant au moins l'une des revendications 1 à 7 précédentes, comprenant les stades suivants :
a) alignement des brides (FLG) de tuyau avec au moins trois bagues (AJR) d'adaptation montées entre les surfaces (FLS) d'étanchéité de bride,
b) torsion des bagues (AJR) d'adaptation autour de l'axe (X), les unes par rapport aux autres, dans une position de jonction, de manière à ce que les surfaces de contact des bagues (AJR) d'adaptation, faisant face directement aux surfaces (FLS) d'étanchéité de bride, soient dirigées sensiblement parallèlement aux surfaces (FLS) d'étanchéité de bride respectives leur faisant face et, de manière à ce que les bagues (AJR) d'adaptation, montées au voisinage respectivement des surfaces (FLS) d'étanchéité de bride, soient disposées, par l'évidement (HOL) s'étendant suivant l'axe (X), respectivement sensiblement concentriquement à la bride (FLG) de tuyau voisine,
c) jonction à coopération de matière des bagues (AJR) d'adaptation dans la position de jonction,
d) montage final des deux brides (FLG) de tuyau en un bridage avec interposition des bagues (AJR) d'adaptation entre les deux surfaces (FLS) d'étanchéité de bride.

9. Procédé suivant la revendication 8, dans lequel, après la torsion et avant la jonction à coopération de matière, le stade suivant est effectué :
b1) contrôle de l'absence de contrainte du montage (ARR) avec les bagues (AJR) d'adaptation.

10. Procédé suivant la revendication 8, dans lequel, après la torsion et avant la jonction à coopération de matière, le stade suivant est effectué :
b2) repérage de la position périphérique relative des bagues (AJR) d'adaptation les unes par rapport aux autres dans la position de jonction.

11. Procédé suivant la revendication 8 ou 9, dans lequel, après la torsion et avant la jonction à coopération de matière, le stade suivant est effectué :
b3) retrait des bagues (AJR) d'adaptation du montage entre les surfaces (FLS) d'étanchéité de bride.
